# EUROPEAN PATENT APPLICATION

(11) **EP 4 803 582 A1**
(43) Date of publication of application: **09.09.2026**
(21) Application number: 26154297.1
(22) Date of filing: 27.01.2026
(51) Int. Cl.: C09B 67/22, C09B 67/20, C09D 11/037

(54) **AQUEOUS CYAN PIGMENT SLURRY AND INK COMPOSITION COMPRISING THE SAME**

(30) Priority: 07.03.2025 TW 114108474
(71) Applicant: Everlight Chemical Industrial Corporation, 106 Taipei City (TW)
(72) Inventor: PENG, Wen-Sheng, Taoyuan City, 328 (CN); LEE, Meng-Wei, Taoyuan City, 328 (CN); YEH, An-Gong, Taoyuan City, 328 (CN)
(74) Representative: van Dam, Vincent

(57) **Abstract**

An aqueous cyan pigment slurry is provided, which comprises: 10 wt% to 25 wt% of phthalocyanine pigment, which is a Cu phthalocyanine pigment, Ni phthalocyanine pigment or a combination thereof; 0.2 wt% to 10 wt% of saturated fatty acid salts, which is a metal salt of C₁₀₋₁₈ linear or branch fatty acid; 0.2 wt% to 10 wt% of an ionic dye, which is a phthalocyanine dye, a triphenodioxazine dye, an anthraquinone dye or a combination thereof comprising at least one ionic group; and water. The present invention further provides an ink composition formulated with the aforesaid aqueous cyan pigment slurry.

## Description

### CROSS-REFERENCE TO RELATED APPLICATIONS

This application claims the benefits of the Taiwan Patent Application Serial Number 114108474, filed on March 7, 2025, the subject matter of which is incorporated herein by reference.

### BACKGROUND OF THE INVENTION

### Field

The present invention relates to an aqueous cyan pigment slurry and an ink composition comprising the same. More specifically, the present invention relates to an aqueous cyan pigment slurry with good stability and an ink composition comprising the same.

### Description of Related Art

Generally speaking, pigments cannot be well dispersed in water or solvents. Currently, many studies have attempted to improve the dispersion of pigments in water or solvents. For example, dispersants (e.g., polymeric dispersants) can be added, or the pigments can be modified with functional groups (e.g., polar groups can be modified on the surface of the pigments) to achieve uniform dispersion, which is beneficial for the subsequent formulation of ink compositions.

Even so, as the application fields of pigments become wider and wider, the substrates for dyeing become more and more varied, or the printing speed becomes faster and faster, the current pigment dispersions or inks formulated with them still have their shortcomings such as poor dispersibility, insufficient stability, or the need for multiple purification steps.

Therefore, it is desirable to provide a novel aqueous dispersion of pigments and an ink composition comprising the same to solve the aforesaid problems.

### SUMMARY OF THE INVENTION

The present invention provides an aqueous cyan pigment slurry, comprising: 10 wt% to 25 wt% of a phthalocyanine pigment, which is a Cu phthalocyanine pigment, a Ni phthalocyanine pigment or a combination thereof; 0.2 wt% to 10 wt% of a saturated fatty acid salt, which is a metal salt of a C₁₀₋₁₈ linear or branch fatty acid; 0.2 wt% to 10 wt% of an ionic dye, which is a phthalocyanine dye, a triphenodioxazine dye, an anthraquinone dye or a combination thereof comprising at least one ionic group; and water.

In the present invention, when the phthalocyanine pigment, the saturated fatty acid salt and the ionic dye are formulated in the aforesaid ratio, the obtained aqueous cyan pigment slurry can have excellent dispersion properties, low viscosity and/or high stability. In addition, in the aqueous cyan pigment slurry of the present invention, by combining the ionic dye comprising at least one ionic group with the saturated fatty acid salt, the obtained aqueous cyan pigment slurry has excellent dispersion properties. Furthermore, the manufacturing process of the aqueous cyan pigment slurry of the present invention only requires grinding and filtration equipment, without the need for purification steps, thus offering the advantage of a simpler process.

In the present invention, the Cu phthalocyanine pigment may be represented by the following formula (A), and the Ni phthalocyanine pigment may be represented by the following formula (B).

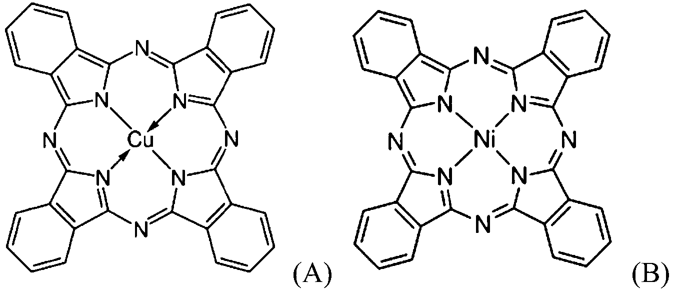

In the present invention, the phthalocyanine dye comprising at least one ionic group may be represented by the following formula (I): 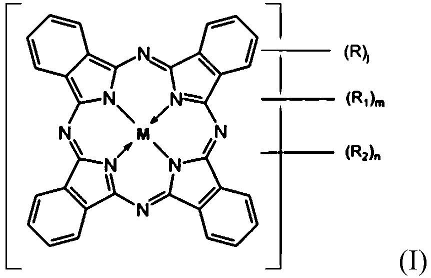
wherein, M is Cu or Ni;
j is 1 to 4, m is 0 to 2, n is 0 to 2, and 1 ≤ j+m+n ≤ 4;
R is -SO₃H, -SO₃Na, -SO₃Li, -COOH, -COONa or -COOLi;
R₁ is -SO₂NH₂, 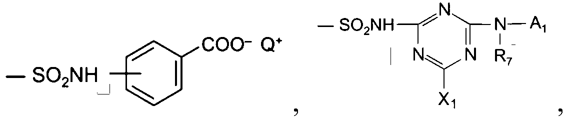 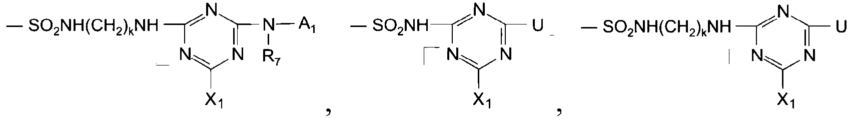 or 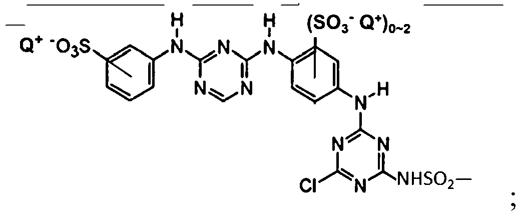
R₂ is -SO₂NH₂, -SO₂NH(CH₂)ₕO⁻Q⁺, 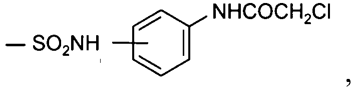 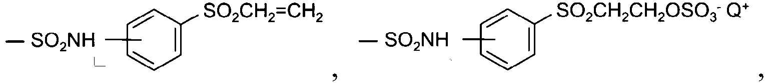 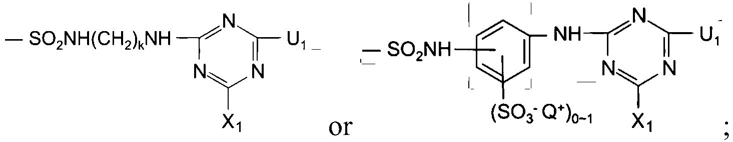
X₁ is halogen (such as F or Cl), C₁₋₃ alkoxy or 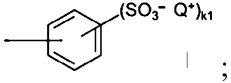
A₁ is 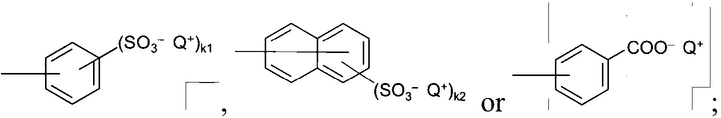
U is a quaternary ammonium substituent;
U₁ is halogen (such as F or Cl), -NH₂, -NHCN, C₁₋₃ alkoxy, 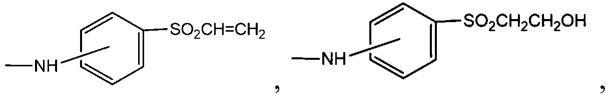 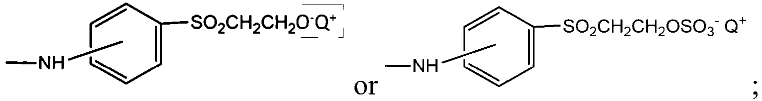
Q is H, Li or Na;
R₇ is H or C₁₋₄ alkyl;
h is 2, 3, 4, 5 or 6;
k is 2, 3 or 4;
k1 and k2 independently is 1 or 2.

In one embodiment, in the formula (I), 1.5 ≤ j+m+n ≤ 3.5.

In one embodiment, in the formula (I), U may be 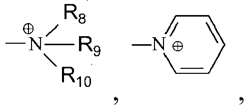 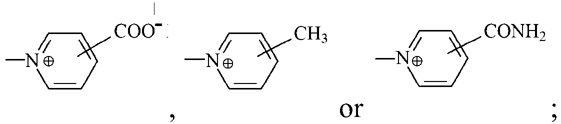 wherein R₈, R₉ and R₁₀ independently is C₁₋₄ alkyl.

In one embodiment, in the formula (I), R may be -SO₃Na or -SO₃Li.

In one embodiment, in the formula (I), R₁ may be -SO₂NH₂, 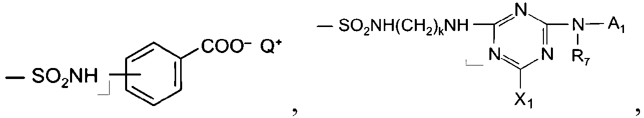 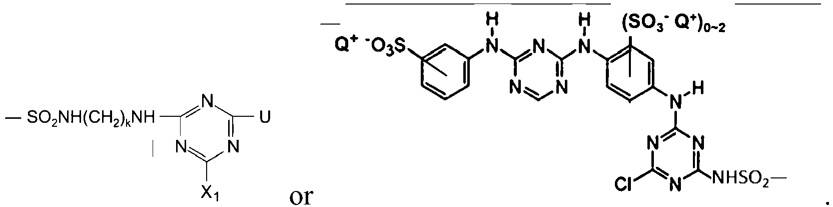 In R₁ of the present embodiment, X₁ may be Cl or C₁₋₃ alkoxy; A₁ may be 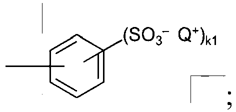 U may be 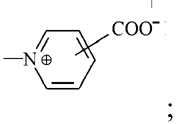 Q may be Na; R₇ may be H; k may be 2; and k1 may be 2.

In one embodiment, in the formula (I), R₂ may be -SO₂NH₂, - SO₂NH(CH₂)ₕO⁻Q⁺, 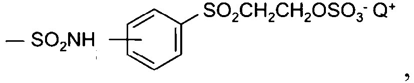 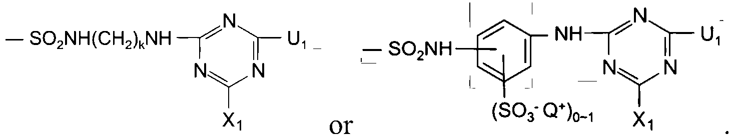 In R₂ of the present embodiment, X₁ may be Cl; U₁ may be -NH₂ or 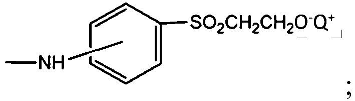 Q may be Li or Na; h may be 2; and k may be 2.

In one embodiment, in the formula (I), R may be -SO₃Na/Li, m and n may be 0, and j+m+n may be 2.3.

In one embodiment, in the formula (I), R may be -SO₃Na, R₁ may be 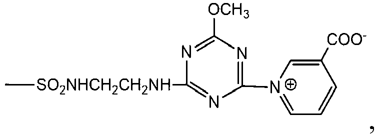 R₂ may be SO₂NH₂, and j+m+n may be 3.0.

In one embodiment, in the formula (I), R may be -SO₃Na, R₁ may be 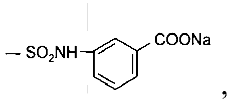 n may be 0, and j+m+n may be 2.8.

In one embodiment, in the formula (I), R may be -SO₃Na, R₁ may be - SO₂NH₂, R₂ may be 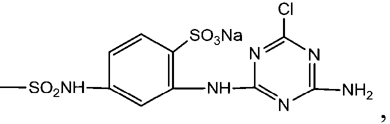 and j+m+n may be 3.5.

In one embodiment, in the formula (I), R may be -SO₃Na/Li, m may be 0, R₂ may be -SO₂NH(CH₂)₂ONa/Li, and j+m+n may be 2.5.

In one embodiment, in the formula (I), R may be -SO₃Na, R₁ may be 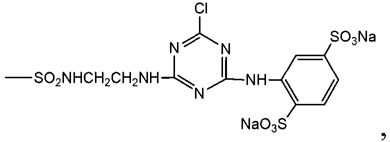 n may be 0, and j+m+n may be 2.0.

In one embodiment, in the formula (I), R may be -SO₃Na, m may be 0, R₂ may be 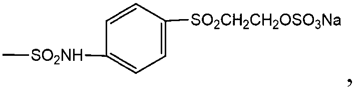 and j+m+n may be 2.8.

In one embodiment, in the formula (I), R may be -SO₃Na, R₁ may be 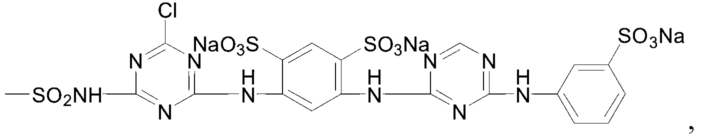 R₂ may be - SO₂NH₂, and j+m+n may be 3.0.

In one embodiment, in the formula (I), R may be -SO₃Na, m may be 0, R₂ may be 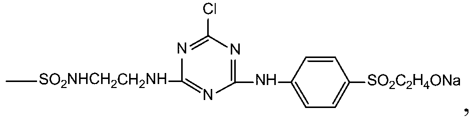 and j+m+n may be 2.8.

In the present invention, the triphenodioxazine dye comprising at least one ionic group may be represented by the following formula (II): 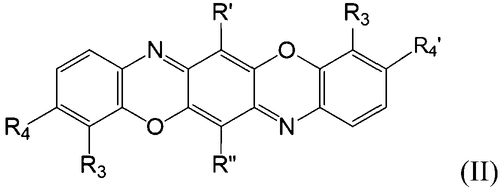
wherein, R' and R" independently is Cl, CH₃ or C₂H₅;
each R₃ independently is -SO₃⁻Q⁺, -SO₂C₂H₄O⁻Q⁺ or -SO₂C₂H₄OSO₃⁻Q⁺;
R₄ and R4' independently is -NH₂, -NH(CH₂)ₛ₁CH₃, -NH(CH₂)ₛ₂NH₂, 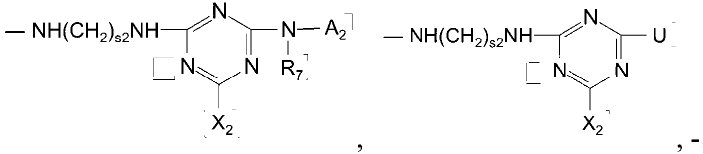
NH(CH₂)ₛ₃OSO₃⁻Q⁺, -NH(CH₂)ₛ₄NHCOC₂H₄COO⁻Q⁺, -
NH(CH₂)ₛ₃CO(CH₂)ₛ₄COO⁻Q⁺ or -NH(CH₂)ₛ₄NHCOC₂H₄OSO₃⁻Q⁺;
X₂ is halogen, C₁₋₃ alkoxy, 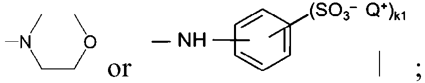
A₂ is 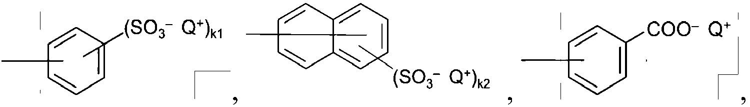 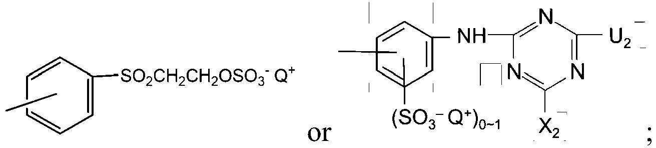
U is a quaternary ammonium group;
U₂ is halogen, -NH₂, -NHCN, C₁₋₃ alkoxy, 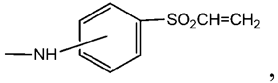 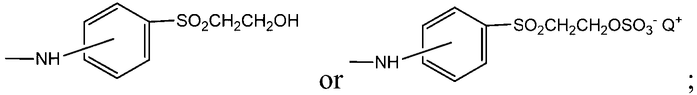
Q is H, Li or Na;
s1 is 1, 2 or 3;
s2, s3, s4 independently is 2, 3 or 4;
k1 and k2 independently is 1 or 2; and
R₇ is H or C₁₋₄ alkyl.

In one embodiment, in the formula (II), U may be 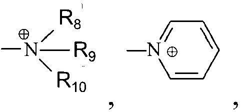 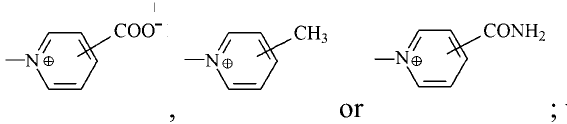 wherein R₈, R₉ and R₁₀ may independently be C₁₋₄ alkyl.

In one embodiment, in the formula (II), R' and R" may independently be Cl or C₂H₅; each R₃ may independently be -SO₃⁻Q⁺ or -SO₂C₂H₄O⁻Q⁺; R₄ and R4' may independently be 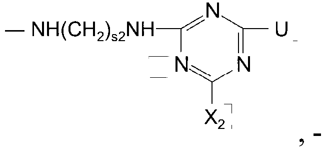 NH(CH₂)ₛ₃CO(CH₂)ₛ₄COO⁻Q⁺ or -NH(CH₂)ₛ₄NHCOC₂H₄COO⁻Q⁺; X₂ may be 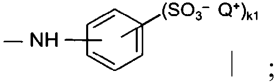 U may be 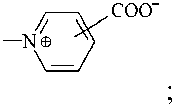 s2, s3 and s4 may be 2; k1 may be 1; and Q may be Na.

In one embodiment, the formula (II) may be one of the following formulas (2-1) to (2-7).

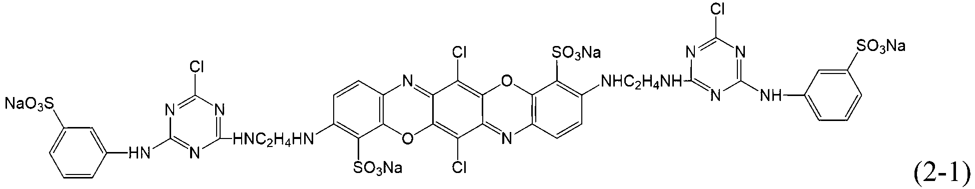

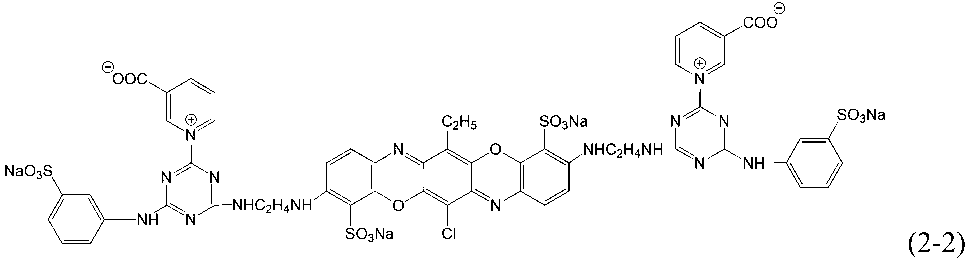

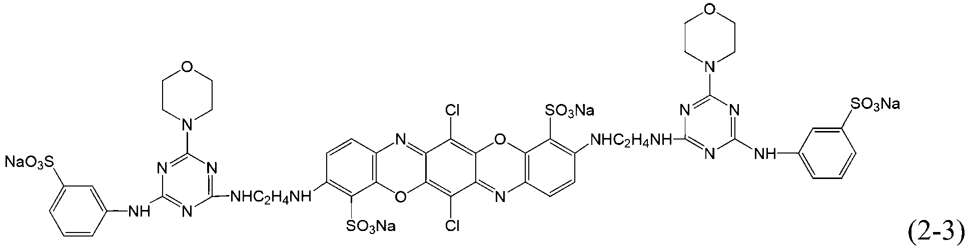

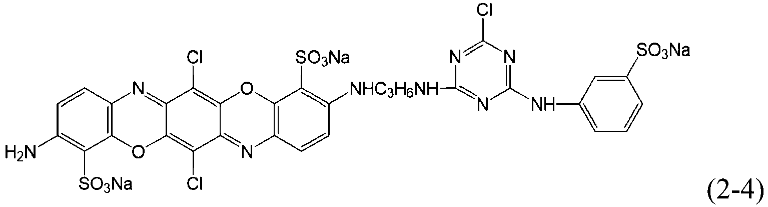

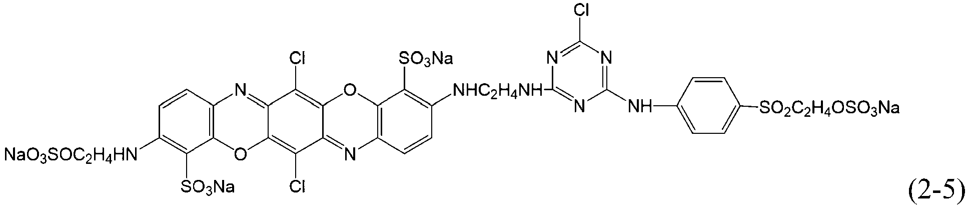

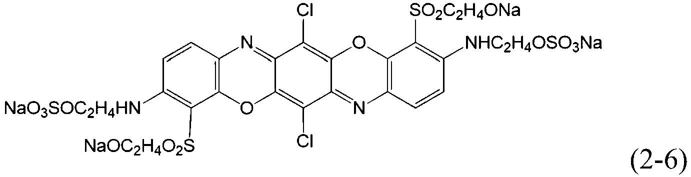

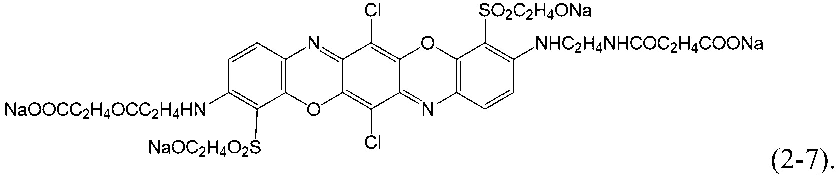

In the present invention, the anthraquinone dye comprising at least one ionic group may be represented by the following formula (III): 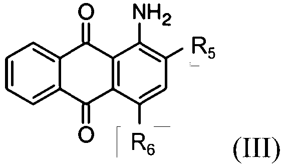
wherein R₅ is -SO₃⁻ Q⁺ or -SO₂C₂H₄OSO₃⁻ Q⁺;
R₆ is 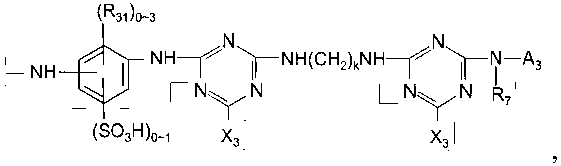 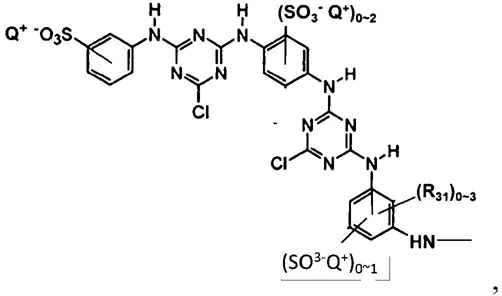 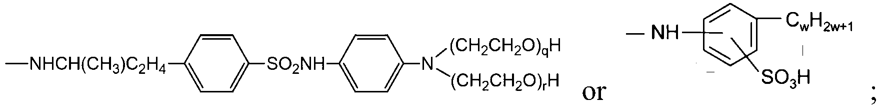
X₃ is halogen, or C₁₋₃ alkoxy;
R₃₁ is C₁₋₄ alkyl;
A₃ is 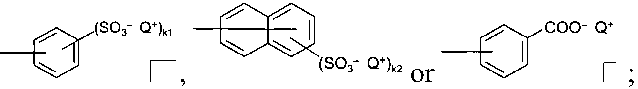
Q is H, Li or Na;
k is 2, 3 or 4;
q and r independently is a integer, and q+r ranges from 12 to 30;
w is an integer from 10 to 20;
k1 and k2 independently is 1 or 2;
R₇ is H or C₁₋₄ alkyl.

In one embodiment, in the formula (III), R₅ may be -SO₃⁻ Q⁺; R₆ may be 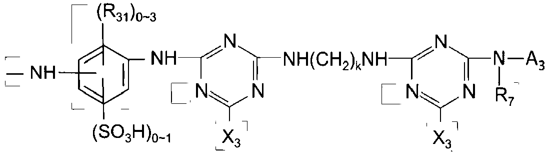 or 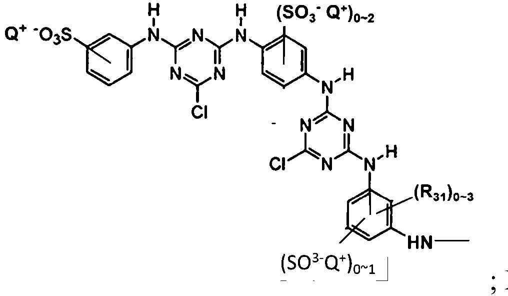 X₃ may be Cl; R₃₁ may be methyl; A₃ may be 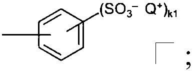 Q may be Na; R₇ may be H; and k may be 3.

In one embodiment, the formula (III) may be at least one of the following formulas (3-1) to (3-4).

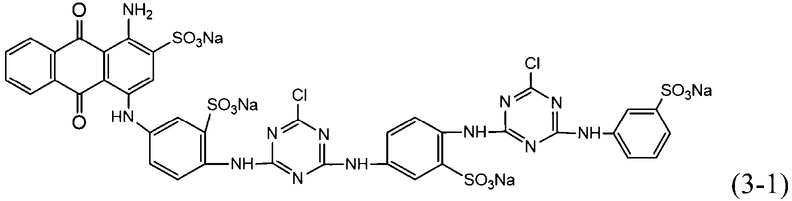

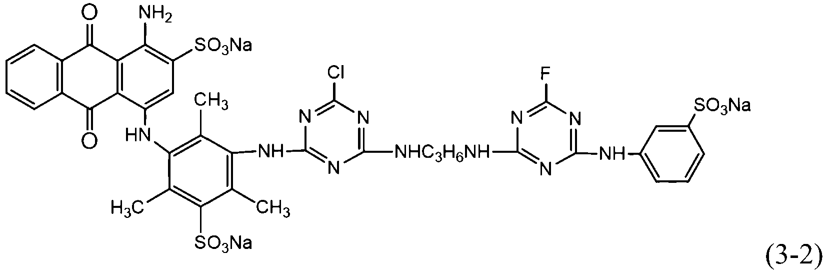

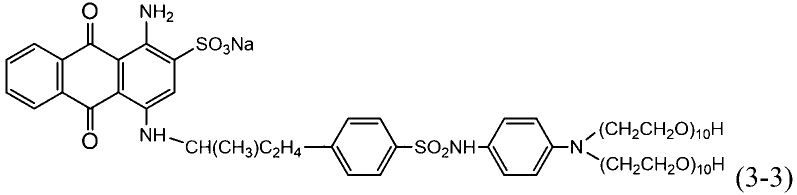

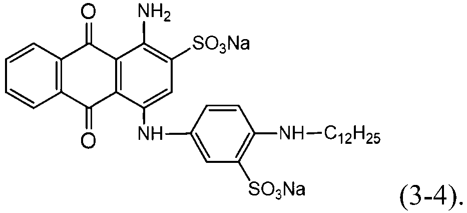

In the present invention, alkyl or alkoxy may be selectively unsubstituted or substituted by a substituent, which may be alkyl, cycloalkyl, halogen, alkoxy, alkenyl, heterocycloalkyl, aryl, heteroaryl, ester, amino, or carboxyl, but alkyl is not substituted by alkyl.

In the present invention, the term "halogen" comprises F, Cl, Br, and I.

In the present invention, the term "alkyl" comprises linear and branched alkyl, for example, linear and branched C₁₋₄ alkyl, C₁₋₃ alkyl or C₁₋₂ alkyl; and specific exmaples thereof include, but not limited to: methyl, ethyl, propyl, isopropyl, butyl, isobutyl, sec-butyl, or tert-butyl.

In the present invention, the term "alkoxy" refers to the functional group formed by adding an oxygen atom to an alkyl group as defined in the present invention, which comprises, for example, linear and branched C₁₋₄ alkoxy, C₁₋₃ alkoxy or C₁₋₂ alkoxy; and sepcific examples thereof include, but not limited to: methoxy, ethoxy, propoxy, 2-propoxy, butoxy, or tert-butoxy.

In the present invention, the ionic dyes represented by the aforesaid formulas (I), (II) and/or (III) can be prepared through known steps in dye synthesis (e.g., diazotization, coupling, condensation, hydrolysis, etc.).

In the present invention, the saturated fatty acid salt may be a lithium salt or a sodium salt of a C₁₀₋₁₈ linear or branch fatty acid, for example, may be a lithium salt or a sodium salt of a C₁₁₋₁₈ linear or branch fatty acid, a lithium salt or a sodium salt of a C₁₂₋₁₈ linear or branch fatty acid, a lithium salt or a sodium salt of a C₁₂₋₁₈ linear fatty acid or a sodium salt of a C₁₂₋₁₈ linear fatty acid.

In the present invention, the average particle size of the aqueous cyan pigment slurry may be less than 180 nm, and the D95 particle size may be less than 400 nm. In the present invention, the term "D95 particle size" refers to the equivalent diameter of the largest particle when the cumulative distribution in the particle size distribution curve is 95%. Furthermore, after aging tests, the viscosity change of the aqueous cyan pigment slurry of the present invention may be less than 25%, and the average particle size change may be less than 20%.

In addition to providing the aforementioned aqueous cyan pigment slurry, the present invention also provides the uses of the aforementioned aqueous cyan pigment slurry. Herein, the aqueous cyan pigment slurry provided by the present invention may be formulated into an ink composition, comprising: the aforesaid aqueous cyan pigment slurry; and water.

In the present invention, the ink composition may further comprise, for example, a surfactant, a pH adjuster, a bactericide, a chelating agent or a combination thereof.

In one embodiment, based on a total weight of the ink composition, 10 wt% to 40 wt% of the aqueous cyan pigment slurry may be mixed with water to formulate the ink composition. More specifically, 10 to 40 parts by weight of the aqueous cyan pigment slurry may be mixed with water to formulate 100 parts by weight of an ink composition.

In one embodiment, based on a total weight of the ink composition, the content of the phthalocyanine pigment may be 1 wt% to 10 wt%, for example, 2 wt% to 10 wt%, 2 wt% to 9 wt%, 2 wt% to 8 wt%, 3 wt% to 8 wt%, 3 wt% to 7 wt%, 4 wt% to 7 wt% or 4 wt% to 6 wt%.

In the present invention, the average particle size of the ink composition may be less than 150 nm, and the D99 particle size may be less than 400 nm. In the present invention, the term "D99 particle size" refers to the equivalent diameter of the largest particle when the cumulative distribution in the particle size distribution curve is 99%. In addition, after aging tests, the viscosity change of the ink composition of the present invention may be less than 10%, and the average particle size change may be less than 10%.

The aqueous cyan pigment slurry and the ink composition comprising the same provided by the present invention can be applied to the traditional printing and dyeing or digital printing of various fibers, for example, it can be applied to the traditional printing and dyeing or digital printing of cellulose fibers, synthetic polyamide fibers, sheepskin, leather and other blended fibers.

The present invention further provides the use of the aforementioned ink composition, which can be used in digital printing (also known as inkjet printing) or traditional printing and dyeing (also known as traditional printing).

Accordingly, the application fields of the ink composition of the present invention include, for example, desktop printing of paper, large-format printing, carton printing, digital printing of textiles, flexible packaging printing and other inkjet printing related fields; but the present invention is not limited thereto.

Other novel features of the disclosure will become more apparent from the following detailed description when taken in conjunction with the accompanying drawings.

### DETAILED DESCRIPTION OF THE INVENTION

The following is specific embodiments to illustrate the implementation of the present invention. Those who are familiar with this technique can easily understand the other advantages and effects of the present invention from the content disclosed in the present specification. The present invention can also be implemented or applied by other different specific embodiments, and various details in the present specification can also be modified and changed according to different viewpoints and applications without departing from the spirit of the present invention.

Unless otherwise stated in the specification, the singular forms "a" and "the" used in the specification and the appended claims include one or the plural individual.

Unless otherwise stated in the specification, the term "or" used in the specification and the appended claims generally includes the meaning of "and/or".

In addition, in the present specification, the term "about" or "approximately" usually means within 20%, within 10%, within 5%, within 3%, within 2%, within 1% or within 0.5% of a given value or range. The quantities given here are approximate quantities, that is, even if "about" or "approximately" is not specifically stated, the meaning of "about" or "approximately" can still be implied. In addition, the terms "range from a first value to a second value" or "range between a first value and a second value" mean that the range includes the first value, the second value, and other values therebetween.

The present invention will be described in more detail through examples, but these examples are not intended to limit the scope of the present invention. Unless otherwise specified, in the following examples and comparative examples, temperatures are in degrees Celsius, and parts and percentages are by weight. The relationship between parts by weight and parts by volume is like the relationship between kilograms and liters.

### Compound preparation

### Compound 1-1

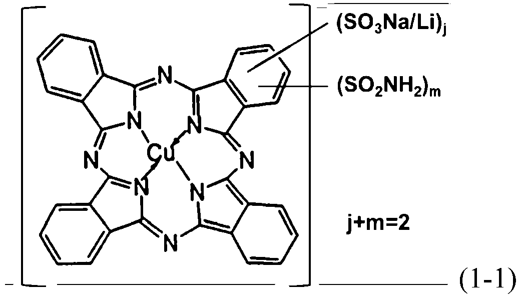

0.04 moles of the copper phthalocyanine masterbatch structure of the following formula (i) were dispersed in 250 ml of ice water. 0.32 moles of ammonia solution were added dropwise over 30 minutes, while maintaining the pH value at 9. After reacting for 1 hour, 30 g of sodium chloride was added to produce a dye precipitate. The precipitate was then filtered and dried to obtain Compound 1-1.

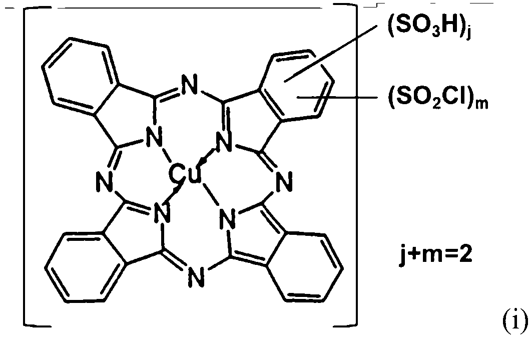

### Compound 1-2

0.2 moles of the copper phthalocyanine dye structure (sodium salt) of the following formula (ii) were dispersed in 1000 ml of deionized water. The pH of the solution was raised to 9 with 10 wt% lithium hydroxide (LiOH) aqueous solution and maintained for one hour. The dye solution was then spray-dried to obtain Compound 1-2.

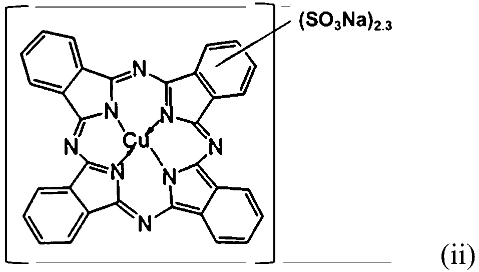

### Compound 1-4

0.4 moles of the copper phthalocyanine masterbatch structure of the following formula (iii) were dispersed in 2500 ml of ice water, 27.4 g of 3-aminobenzoic acid was added, and 20 wt% sodium carbonate aqueous solution was added dropwise to maintain pH=8, followed by reacting for 1 hour. After that, the mixture was filtered, desalted by a membrane and spray-dried to obtain Compound 1-4.

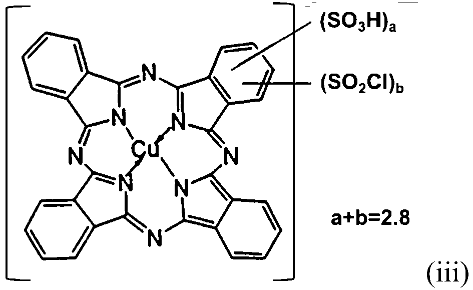

### Compound 1-5

0.1 mol of the copper phthalocyanine masterbatch structure of the following formula (iv) was dispersed in 600 ml of ice water, followed by adding 0.12 mol of ammonia solution. After reacting at 0°C for 30 minutes, 0.1 mol of 2,4-diaminobenzenesulphonic acid powder was added. The pH was adjusted and controlled to 7.5 with 15 wt% sodium carbonate (Na₂CO₃) aqueous solution, and the reaction was maintained at 50°C for 2 hours. Then, acid precipitation was performed with HCl aqueous solution, and an intermediate product was obtained by filtration.

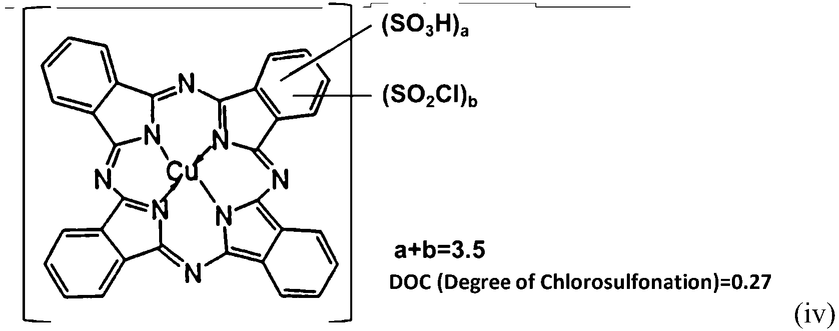

The intermediate wet filter cake was dispersed in 1200 ml of ice water, and 0.105 moles of cyanuric chloride were added. The reaction was carried out at 0°C with pH controlled at 5.5 using a 15 wt% sodium carbonate aqueous solution for 3 hours. The insoluble matter was removed by filtration, and the solution was obtained. 0.6 moles of ammonia solution were added to the above solution, and the temperature was raised to 40°C. After reacting at 40°C for 4 hours, the pH of the reaction solution was adjusted to 7 with an HCl aqueous solution. After salting out, filtration, and drying, Compound 1-5 was obtained.

### Compound 1-6

0.1 mole of the copper phthalocyanine masterbatch structure of the following formula (v) was dispersed in 600 ml of deionized water at 0°C. 0.15 mole of ethanolamine was added, and the pH was controlled at 9-9.5 with 15 wt% sodium carbonate aqueous solution. After reacting for 2 hours, an appropriate amount of deionized water was added. The mixture was then subjected to membrane dialysis, lithium salt replacement, concentration, and spray drying to obtain Compound 1-6.

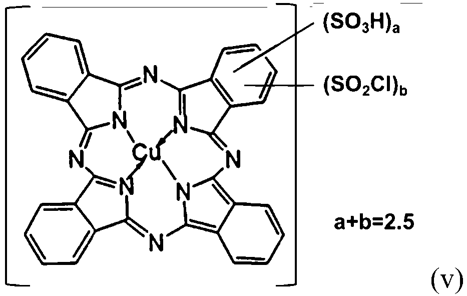

### Compound 1-8

0.1 mole of the copper phthalocyanine masterbatch structure of the formula (iii) was dispersed in 600 ml of water at 0°C. 0.08 mole of 2-[(4-aminophenyl)sulfonyl]ethyl hydrogen sulfate was added. The pH was controlled at 8 with 15 wt% sodium carbonate aqueous solution, and the reaction was maintained at 40°C for 3 hours. Then, the pH of the reaction solution was adjusted to 5 with HCl aqueous solution. After salting out, filtration, and drying, Compound 1-8 was obtained.

### Compound 1-9

0.120 moles of cyanuric chloride were dispersed in 200 ml of ice water by stirring. Then, 300 ml of a pH 7 aqueous solution containing 0.118 moles of 3-aminobenzenesulfonic acid was slowly added. A 15 wt% sodium carbonate aqueous solution was added dropwise to maintain the reaction at pH 5 and 5°C for 1 hour, yielding a white solid product of 2,4-dichloro-6-(3-sulphophenylamino)-1,3,5-triazine.

0.100 moles of 2,4-dichloro-6-(3-sulphophenylamino)-1,3,5-triazine and 0.100 moles of 2,5-diaminobenzene-1,4-disulphonic acid were added to 400 ml of water, and the condensation reaction was carried out at 20 °C and pH 6.5 for 2 hours. Then, this reaction solution was added to 100 ml of ice-water solution containing 0.103 moles of cyanuric chloride, and the reaction was carried out at pH 5 and 5 °C for 2 hours to obtain the structure of formula (vi).

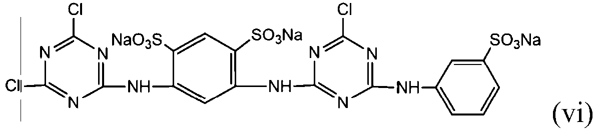

0.120 moles of the copper phthalocyanine masterbatch structure of the following formula (vii) was added to the solution of the formula (vi), and the condensation reaction was carried out at pH 6 and 40°C for 2 hours. After that, the product was concentrated under reduced pressure, and the precipitate was collected, washed and dried to give Compound 1-9.

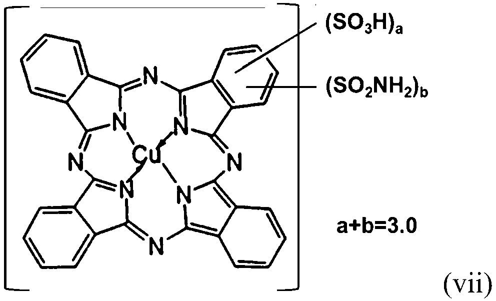

Compounds 1-2 to 1-10 (Cpd. 1-2 to 1-10) of the present invention are listed in the following Table 1.

**Table 1**

| Cpd. | R | R₁ | R₂ | j+m +n |
|---|---|---|---|---|
| 1-2 | SO₃Na /Li | - | - | 2.3 |
| 1-3 | SO₃Na | 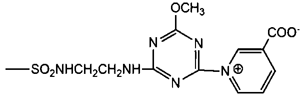 | -SO₂NH₂ | 3.0 |
| 1-4 | SO₃Na | 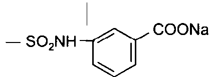 | - | 2.8 |
| 1-5 | SO₃Na | -SO₂NH₂ | 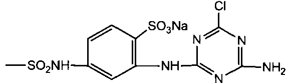 | 3.5 |
| 1-6 | SO₃Na /Li | - | -SO₂NH(CH₂)₂ONa/Li | 2.5 |
| 1-7 | SO₃Na | 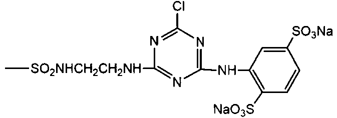 | - | 2.0 |
| 1-8 | SO₃Na | - | 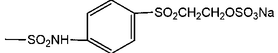 | 2.8 |
| 1-9 | SO₃Na | 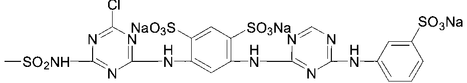 | -SO₂NH₂ | 3.0 |
| 1-10 | SO₃Na | - | 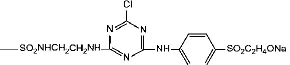 | 2.8 |

### Compound 2-2

0.120 mol of cyanuric chloride was dispersed in 200 ml of ice water with stirring. 300 ml of a pH 7 aqueous solution containing 0.118 mol of 3-aminobenzenesulfonic acid was slowly added. 15 wt% sodium carbonate solution was added dropwise to maintain pH 5, followed by reacting at 5°C for 1 hour. 100 ml of dispersion solution containing 0.05 mol of a triphendioxazine dyebase of the following formula (viii) was added. 15 wt% sodium carbonate (Na₂CO₃) solution was used to control the pH at 8, followed by reacting at 30°C for 2 hours.

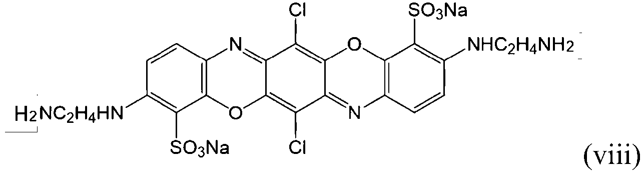

0.15 moles of nicotine acid was added. After the reaction was carried out at pH 9 and 80°C for 3 hours, Compound 2-2 was obtained by salting out, filtration, and drying.

### Compound 2-7

Compound 2-7 can be prepared using appropriate reactants and with reference to the contents disclosed in US4992589.

Compounds 2-2 to 2-7 (Cpd. 2-2 to 2-7) of the present invention are listed in the following Table 2.

**Table 2**

| Cpd. | Dye dispersion structure |
|---|---|
| 2-2 | 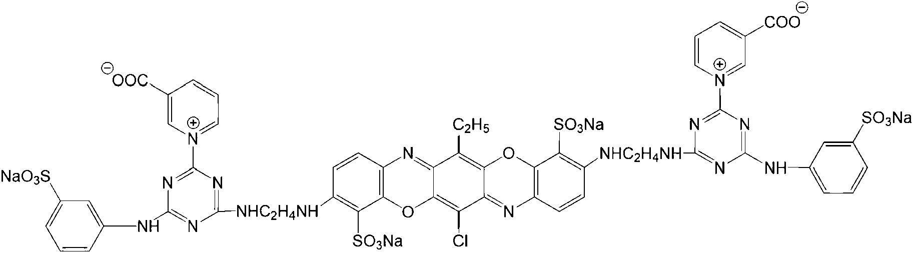 |
| 2-3 | 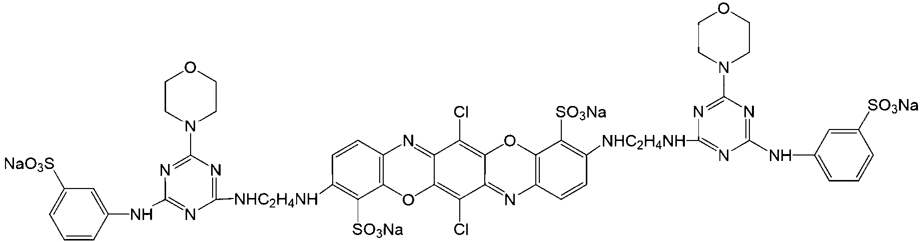 |
| 2-4 | 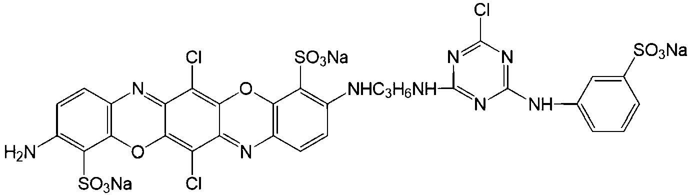 |
| 2-5 | 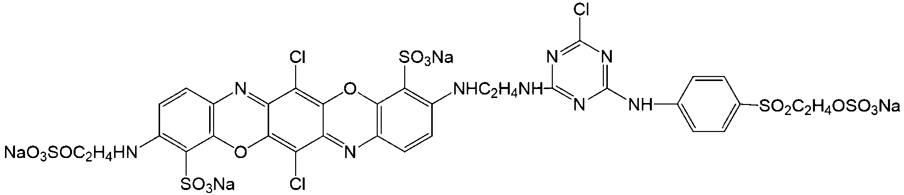 |
| 2-6 | 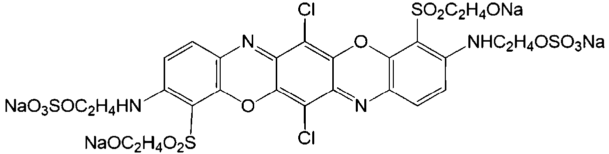 |
| 2-7 | 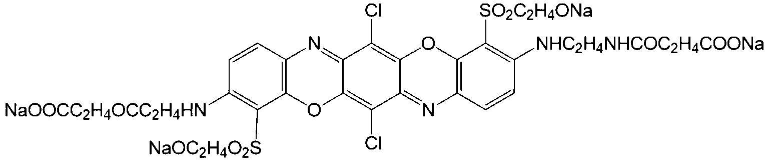 |

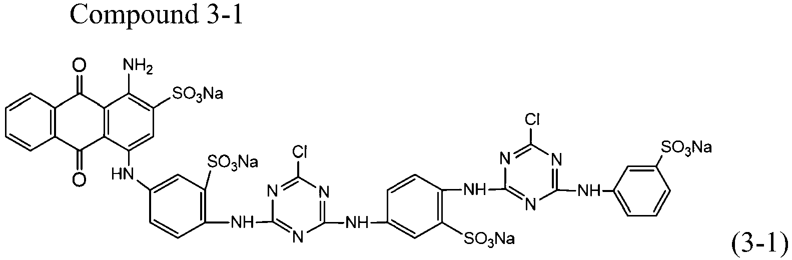

0.100 mol of the anthraquinone masterbatch structure of the following formula (ix) was dispersed in 600 ml of deionized water at 0°C. 0.105 mol of cyanuric chloride was added, and the pH was controlled at 5 with a 15 wt% sodium carbonate solution. The reaction was carried out at 5°C for 2 hours, and the insoluble matter was removed by filtration. Then, 0.950 mol of 2,5-diaminobenzenesulfonic acid was added to the reaction solution, and the pH was controlled at 6.5 with a 15 wt% sodium carbonate solution. The reaction was carried out at 35°C for 2 hours to obtain a reaction solution (A). The main intermediate product is shown in the following formula (x).

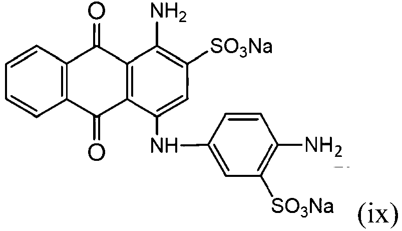

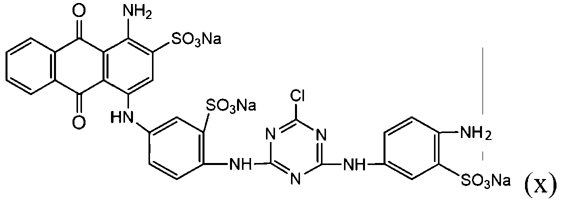

0.105 moles of 3-aminobenzenesulfonic acid were dispersed in 300 ml of water and adjusted to pH 7. The solution was then added dropwise to 200 ml of an ice-water dispersion of 0.100 moles of cyanuric chloride. The pH was maintained at 5 with a 15 wt% sodium carbonate solution, and the reaction was carried out at 5 °C for 1 hour to obtain a white solid product (B).

The white solid product (B) was slowly added to the reaction solution (A), and the mixture was stirred and dispersed thoroughly. The pH was maintained at 6.5 with a 15 wt% sodium carbonate aqueous solution, and the reaction was carried out at 40°C for 3 hours. After membrane dialysis, desalting, concentration, and spray drying, Compound 3-1 was obtained.

### Compound 3-2

Compound 3-2 can be prepared using appropriate reagents and following the preparation method of Compound 3-1 described above.

Compounds 3-2 to 3-4 (Cpd. 3-2 to 3-4) of the present invention are listed in the following Table 3.

**Table 3**

| Cpd. | Dye dispersion structure |
|---|---|
| 3-2 | 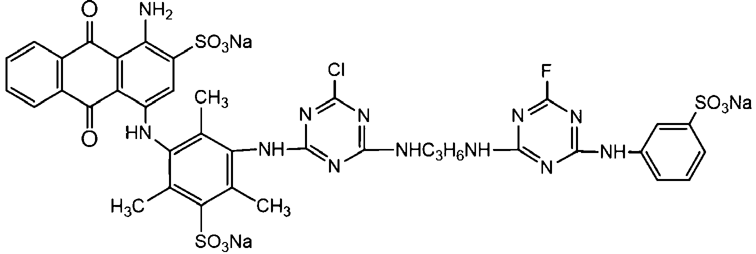 |
| 3-3 | 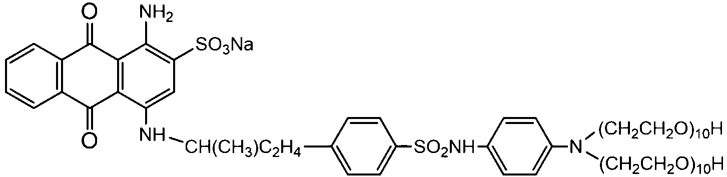 |
| 3-4 | 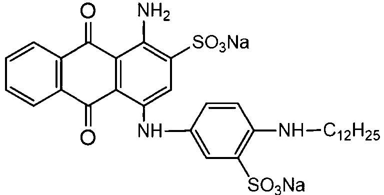 |

Hereinafter, the aqueous cyan pigment slurry of Embodiments and Comparative embodiments of the present invention will be prepared.

In the following Embodiments and Comparative embodiments, the used phthalocyanine pigment is Pigment Blue 15:3 or Pigment Blue 15:4, which is a Cu phthalocyanine pigment.

According to the formulations shown in Tables 4 and 5 below, ionic dye and saturated fatty acid salt were added to a 100 mL bottle. Water was added and the dye was confirmed to be completely dissolved. Then, the pigment powder was weighed and slowly added to the bottle. The dispersion was shaken until the pigment was completely wetted. 0.3 mm zirconium beads with a 50% filling ratio were added, the bottle cap was tightened, and the mixture was shaken for 120 minutes using a LAU shaker (model: Disperser DAS 200). Finally, the zirconium beads and dispersion were separated with a metal filter, followed by diluting with water to obtain aqueous cyan pigment slurry.

Particle size was then measured using a Malvern zetasizer at 25 °C, and viscosity was measured using a Brookfield viscometer DV-II+ Pro at 25 °C. The results are listed in Tables 4 and 5 below.

In addition, accelerated aging tests were conducted to assess the stability of aqueous cyan pigment slurry. The test method involved sealing the samples and placing them in a 60 °C oven for 7 days. The results are listed in Table 6 below.

**Table 4 - Formulation and measurement results of particle size and viscosity of Embodiments (Ex.)**

| Components of dispersion | | | | | Measurement results (Zave < 180 nm□ D95 particle size < 400 nm) | | |
|---|---|---|---|---|---|---|---|
| Ex. | Pigment (g) | Dye (g) | Saturated fatty acid salt (g) | Water (g) | Viscosity (g/s.cm) | Zave (nm) | D95 (nm) |
| 1-1 | PB15:3 (10) | Compound 1-2 (1.5) | C₁₁H₂₃COONa (0.77 g) | 46 | 1.7 | 121 | 285 |
| 1-2 | PB15:3 (10) | Compound 1-2 (1.5) | C₁₂H₂₅COONa (0.77) | 46 | 2.1 | 134 | 324 |
| 1-3 | PB15:3 (10) | Compound 1-2 (1.5) | C₁₅H₃₁COONa (0.97) | 46 | 3.0 | 142 | 316 |
| 1-4 | PB15:3 (10) | Compound 1-2 (1.5) | C₁₇H₃₅COONa (1.06 g) | 46 | 3.5 | 137 | 311 |
| 1-5 | PB15:4 (10) | Compound 1-2 (2.0) | C₁₁H₂₃COONa (0.77 g) | 46 | 1.8 | 122 | 305 |
| 1-6 | PB 15: 3 (10) | Compound 1-2 (0.5) | C₁₁H₂₃COONa (0.50g) | 46 | 1.8 | 140 | 316 |
| 1-7 | PB15:4 (10) | Compound 1-5 (2.0) | C₁₁H₂₃COONa (0.77 g) | 46 | 2.1 | 135 | 300 |
| 1-8 | PB15:4 (10) | Compound 1-8 (2.0) | C₁₁H₂₃COONa (0.77 g) | 46 | 3.3 | 140 | 287 |
| 1-9 | PB15:3 (10) | Compound 1-6 (2.0) | C₁₁H₂₃COONa (0.77 g) | 46 | 1.8 | 124 | 252 |
| 1-10 | PB15:3 (10) | Compound 1-4 (0.5) | C₁₁H₂₃COONa (0.80 g) | 56 | 2.1 | 123 | 394 |
| 1-11 | NiPC (10) | Compound 1-9 (0.5) | C₁₁H₂₃COONa (0.80 g) | 56 | 2.7 | 121 | 296 |
| 1-12 | PB15:3 (10) | Compound 2-2 (2.0) | C₁₁H₂₃COONa (0.77 g) | 49 | 2.0 | 128 | 284 |
| 1-13 | PB15:3 (10) | Compound 2-7 (2.0) | C₁₁H₂₃COONa (0.77 g) | 42 | 2.0 | 125 | 285 |
| 1-14 | PB15:3 (10) | Compound 3-1 (2.0) | C₁₁H₂₃COONa (0.80 g) | 46 | 2.0 | 128 | 301 |
| 1-15 | PB15:3 (10) | Compound 3-2 (2.0) | C₁₁H₂₃COONa (0.80 g) | 46 | 1.8 | 111 | 271 |

**Table 5 - Formulation and measurement results of particle size and viscosity of Comparative embodiments (Comp Ex.)**

| Components of dispersion | | | | | Measurement results (Zave < 180 nm□ D95 particle size < 400 nm) | | Quality Judgment |
|---|---|---|---|---|---|---|---|
| Comp Ex. | PB 15:3 (g) | Dye (g) | Surfactant (g) | Water (g) | Zave (nm) | D95 (nm) | |
| 2-1 | 10 | C.I. Acid Blue 249 (0.5) | - | 46 | 238 | 1950 | Fail |
| 2-2 | 10 | C.I. Acid Blue 249 (1.0) | - | 46 | 283 | 426 | Fail |
| 2-3 | 10 | C.I. Acid Blue 249 (2.0) | - | 46 | 241 | 1690 | Fail |
| 2-4 | 10 | C.I. Direct Blue 87 (0.5) | - | 46 | 184 | 584 | Fail |
| 2-5 | 10 | C.I. Direct Blue 87 (1.5) | - | 46 | 181 | 392 | Fail |
| 2-6 | 10 | C.I. Direct Blue 87 (2.0) | - | 46 | 174 | 380 | Close to fail |
| 2-7 | 10 | C.I. Direct Blue 87 (1.5) | CTAB** (1.27) | 46 | 238 | 1950 | Fail |
| 2-8 | 10 | C.I. Direct Blue 87 (1.5) | C₇H₁₅COO Na (0.58 g) | 46 | 179 | 361 | Close to fail |

| | | | | | | | |
|---|---|---|---|---|---|---|---|
| **CTAB: hexadecyl trimethyl ammonium bromide | | | | | | | |

**Table 6 - Formulation and stability test results of Embodiments and Comparative embodiments**

| Components of dispersion | | | | | Measurement result (ΔVIS < 25%, ΔZave% < 20%) | | Stability 60 °C 7 Days |
|---|---|---|---|---|---|---|---|
| Ex. | Pigment (g) | Dye (g) | Saturated fatty acid salts (g) | Water (g) | ΔVIS% | ΔZave% | |
| 1-1 | PB15:3 (10) | Compound 1-2 (1.5) | C₁₁H₂₃COONa (0.77 g) | 46 | -7% | 10% | Pass |
| 1-2 | PB15:3 (10) | Compound 1-2 (1.5) | C₁₂H₂₅COONa (0.77) | 46 | -3% | 5% | Pass |
| 1-3 | PB15:3 (10) | Compound 1-2 (1.5) | C₁₅H₃₁COONa (0.97) | 46 | 9% | -4% | Pass |
| 1-4 | PB15:3 (10) | Compound 1-2 (1.5) | C₁₇H₃₅COONa (1.06 g) | 46 | 10% | 1% | Pass |
| 1-5 | PB15:4 (10) | Compound 1-2 (2.0) | C₁₁H₂₃COONa (0.77 g) | 46 | -4% | -6% | Pass |
| 1-6 | PB15:3 (10) | Compound 1-2 (0.5) | C₁₁H₂₃COONa (0.50g) | 46 | -5% | -7% | Pass |
| 1-7 | PB15:4 (10) | Compound 1-5 (2.0) | C₁₁H₂₃COONa (0.77 g) | 46 | -4% | -6% | Pass |
| 1-8 | PB15:4 (10) | Compound 1-8 (2.0) | C₁₁H₂₃COONa (0.77 g) | 46 | 2% | 12% | Pass |
| 1-9 | PB15:3 (10) | Compound 1-6 (2.0) | C₁₁H₂₃COONa (0.77 g) | 46 | -3% | -8% | Pass |
| 1-10 | PB15:3 (10) | Compound 1-4 (0.5) | C₁₁H₂₃COONa (0.80 g) | 56 | -11% | 1% | Pass |
| 1-11 | NiPC (10) | Compound 1-9 (0.5) | C₁₁H₂₃COONa (0.80 g) | 56 | -4% | -8% | Pass |
| 1-12 | PB15:3 (10) | Compound 2-2 (2.0) | C₁₁H₂₃COONa (0.77 g) | 49 | 11% | 1% | Pass |
| 1-13 | PB15:3 (10) | Compound 2-7 (2.0) | C₁₁H₂₃COONa (0.77 g) | 42 | 25% | 5% | Pass |
| 1-14 | PB15:3 (10) | Compound 3-1 (2.0) | C₁₁H₂₃COONa (0.80 g) | 46 | 1% | 2% | Pass |
| 1-15 | PB15:3 (10) | Compound 3-2 (2.0) | C₁₁H₂₃COONa (0.80 g) | 46 | 9% | 9% | Pass |
| Comp Ex. 2-6 | PB15:3 (10) | DB 87 (2.0) | - | 46 | -2% | 98% | Fail |
| Comp Ex. 2-8 | PB15:3 (10) | DB 87 (2.0) | C₇H₁₅COONa (0.58 g) | 46 | 120% | 76% | Fail |

As shown in Table 4, the aqueous cyan pigment slurry of Embodiments of the present invention has an average particle size (Zave) of less than 180 nm and a D95 particle size of less than 400 nm after dispersion. As shown in Table 5, the average particle size (Zave) of most Comparative embodiments is greater than 180 nm and the D95 particle size is greater than 400 nm. Furthermore, according to the results in Table 6, the storage stability test results show that the average particle size increase of the aqueous cyan pigment slurry in Embodiments of the present invention does not exceed 20% of the initial average particle size, and the change in pigment viscosity does not exceed 25%. In contrast, the aqueous cyan pigment slurry in Comparative embodiments shows a significant increase in average particle size and a change in pigment viscosity.

### Preparation of ink composition

Based on the total weight of the ink composition to be prepared as 100 wt%, the ink composition was prepared according to the formulations of Embodiments and Comparative embodiments in Table 7 below, wherein the content of phthalocyanine PB 15:3 pigment in the ink composition was 5 wt%. First, all components except the aqueous cyan pigment slurry were mixed evenly, followed by adding the aqueous cyan pigment slurry. Additionally, surfactants, pH adjusters, bactericides, etc., were added as needed. Finally, deionized water was added to bring the total to 100 wt%.

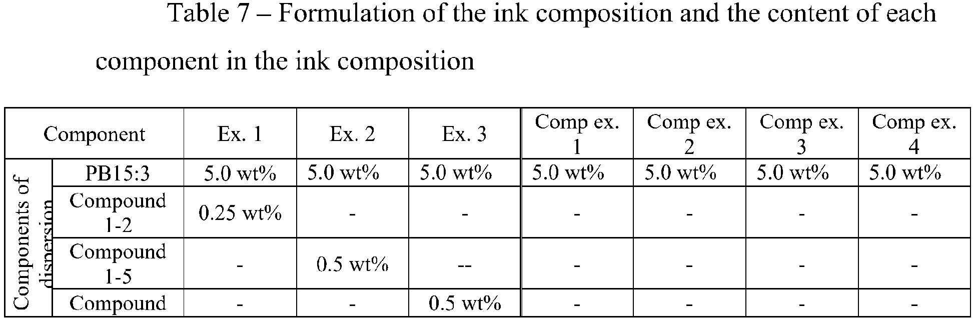

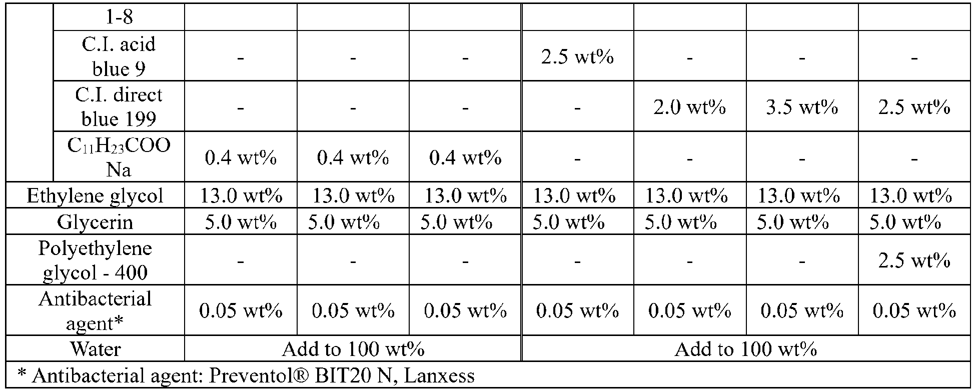

The prepared ink composition was subjected to accelerated aging tests to test its stability. The test method was to seal the sample and place it in a 60 °C oven for 7 days. The results are listed in Tables 8 and 9 below. The ink's performance specifications are as follows: average particle size after dispersion (Zave) < 150 nm, and D99 particle size < 400 nm. Additionally, PDI indicates particle size distribution; and the smaller the number, the more concentrated the distribution, indicating better grinding and dispersion quality. Furthermore, the stability specifications are as follows: ink viscosity change rate not exceeding 10%, and average particle size change rate not exceeding 10%.

**Table 8 - Stability test results of the ink composition**

| | Zave (nm) (<150 nm) | PDI | D99 (nm) (<400 nm) |
|---|---|---|---|
| Ex. 1 | 142 | 0.188 | 348 |
| Ex. 2 | 124 | 0.166 | 305 |
| Ex. 3 | 127 | 0.186 | 378 |
| Comp ex. 1 | 502 | 0.412 | 744 |
| Comp ex. 2 | 158 | 0.266 | 5460 |
| Comp ex. 3 | 157 | 0.334 | 3730 |
| Comp ex. 4 | 185 | 0.234 | 341 |

**Table 9 - Stability test results of the ink composition**

| | ΔViscosity % | ΔZave % |
|---|---|---|
| Ex. 1 | -0.95% | -0.70% |
| Ex. 2 | -1.10% | 0.48% |
| Ex. 3 | 0.99% | 5.33% |
| Comp ex. 1 | 1.05% | -16.76% |
| Comp ex. 2 | 24.81% | 108.93% |
| Comp ex. 3 | 21.08% | 107.62% |
| Comp ex. 4 | 31.64% | 94.87% |

The above results show that dispersing phthalocyanine pigment with structure-screened dyes and surfactants with specific carbon numbers in a specific ratio can yield aqueous cyan pigment slurry with good dispersibility (average particle size <180 nm), low viscosity (<3.5 g/s·cm), and high stability (small change rate after aging at 60 °C for 7 days). Furthermore, when the aqueous cyan pigment slurry of the present invention is further formulated into an ink composition, a finer (average particle size < 150 nm, PDI < 0.200) and more stable (change rate after accelerated aging < 10%) ink composition can also be obtained.

The above embodiments are merely illustrative examples for ease of explanation. The scope of the rights claimed in this disclosure should be determined by the claims of the patent application, and not limited to the above embodiments.

Although the present invention has been explained in relation to its embodiment, it is to be understood that many other possible modifications and variations can be made without departing from the spirit and scope of the disclosure as hereinafter claimed.

## Claims

1. An aqueous cyan pigment slurry, comprising:
10 wt% to 25 wt% of a phthalocyanine pigment, which is a Cu phthalocyanine pigment, a Ni phthalocyanine pigment or a combination thereof;
0.2 wt% to 10 wt% of a saturated fatty acid salt, which is a metal salt of a C₁₀₋₁₈ linear or branch fatty acid;
0.2 wt% to 10 wt% of an ionic dye, which is a phthalocyanine dye, a triphenodioxazine dye, an anthraquinone dye or a combination thereof comprising at least one ionic group; and
water.

2. The aqueous cyan pigment slurry of claim 1, wherein the phthalocyanine dye is represented by the following formula (I): 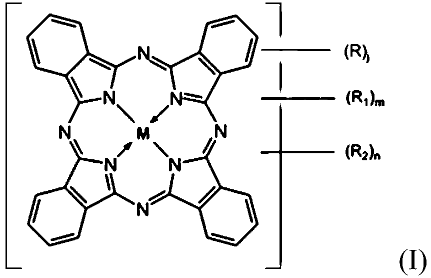
wherein, M is Cu or Ni;
j is 1 to 4, m is 0 to 2, n is 0 to 2, and 1 ≤ j+m+n ≤ 4;
R is -SO₃H, -SO₃Na, -SO₃Li, -COOH, -COONa or -COOLi;
R₁ is -SO₂NH₂, 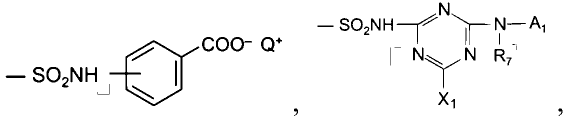 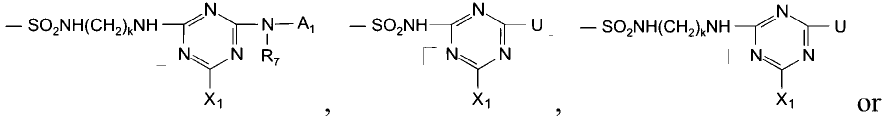 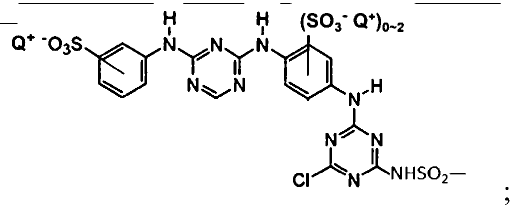
R₂ is -SO₂NH₂, -SO₂NH(CH₂)ₕO⁻Q⁺, 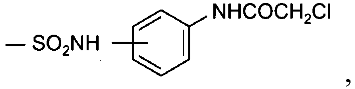 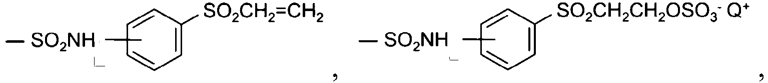 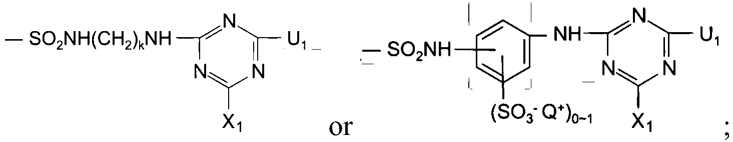
X₁ is halogen, C₁₋₃ alkoxy or 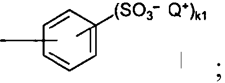
A₁ is 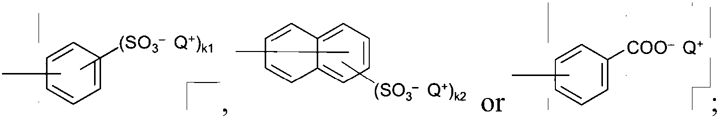
U is a quaternary ammonium substituent;
U₁ is halogen, -NH₂, -NHCN, C₁₋₃ alkoxy, 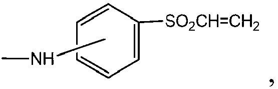 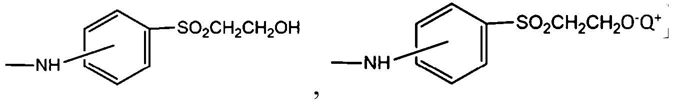 or 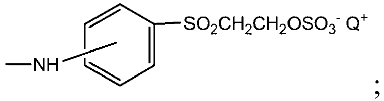
Q is H, Li or Na;
R₇ is H or C₁₋₄ alkyl;
h is 2, 3, 4, 5 or 6;
k is 2, 3 or 4;
k1 and k2 is 1 or 2 independently.

3. The aqueous cyan pigment slurry of claim 2, wherein 1.5 ≤ j+m+n ≤ 3.5.

4. The aqueous cyan pigment slurry of claim 2, wherein U is 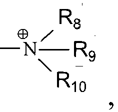 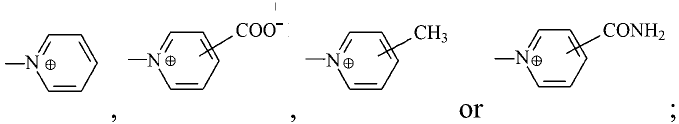 wherein R₈, R₉ and R₁₀ independently is C₁₋₄ alkyl.

5. The aqueous cyan pigment slurry of claim 2, wherein R is -SO₃Na or - SO₃Li.

6. The aqueous cyan pigment slurry of claim 2, wherein R₁ is -SO₂NH₂, 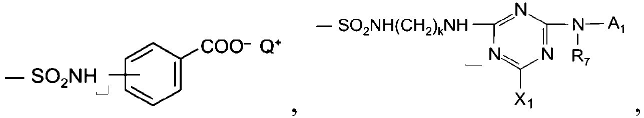 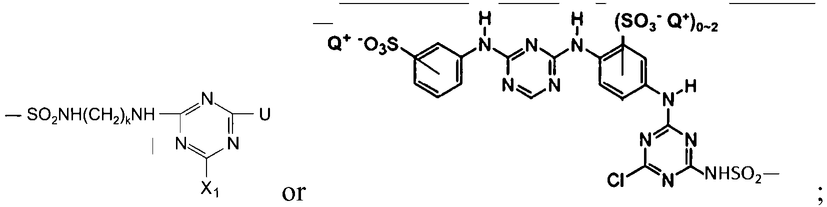 wherein X₁ is Cl or C₁₋₃ alkoxy; A₁ is 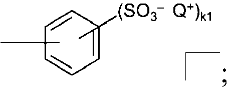 U is 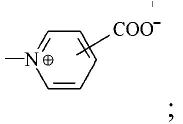 Q is Na; R₇ is H ; k is 2; and k1 is 2.

7. The aqueous cyan pigment slurry of claim 2, wherein R₂ is -SO₂NH₂, - SO₂NH(CH₂)ₕO⁻Q⁺, 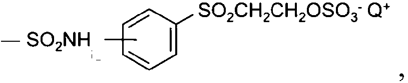 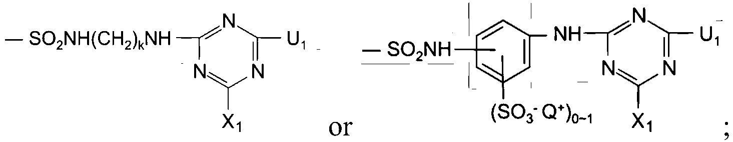 wherein X₁ is Cl; U₁ is -NH₂ or 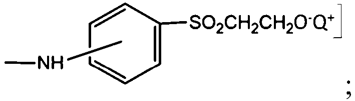 Q is Li or Na; h is 2; and k is 2.

8. The aqueous cyan pigment slurry of claim 1, wherein the triphenodioxazine dye is represented by the following formula (II): 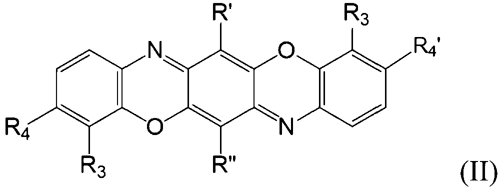
wherein R' and R" independently is Cl, CH₃ or C₂H₅;
each R₃ independently is -SO₃⁻Q⁺, -SO₂C₂H₄O⁻Q⁺ or -SO₂C₂H₄OSO₃⁻Q⁺;
R₄ and R4' independently is -NH₂, -NH(CH₂)ₛ₁CH₃, -NH(CH₂)ₛ₂NH₂, 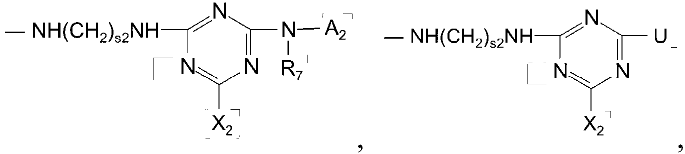 -NH(CH₂)ₛ₃OSO₃⁻ Q⁺, -NH(CH₂)ₛ₄NHCOC₂H₄ COO⁻Q⁺, -NH(CH₂)ₛ₃CO(CH₂)ₛ₄COO⁻Q⁺ or - NH(CH₂)ₛ₄NHCOC₂H₄OSO₃⁻Q⁺;
X₂ is halogen, C₁₋₃ alkoxy, 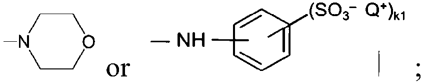
A₂ is 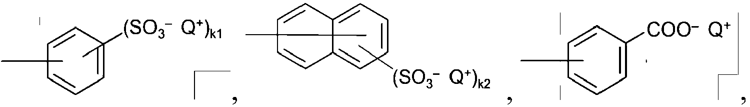 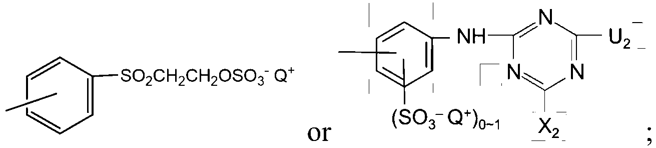
U is a quaternary ammonium group;
U₂ is halogen, -NH₂, -NHCN, C₁₋₃ alkoxy, 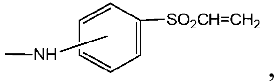 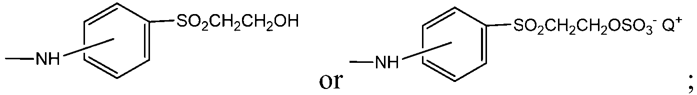
Q is H, Li or Na;
s1 is 1, 2 or 3;
s2, s3 and s4 independently is 2, 3 or 4;
k1 and k2 independently is 1 or 2; and
R₇ is H or C₁₋₄ alkyl.

9. The aqueous cyan pigment slurry of claim 8, wherein U is 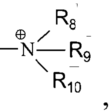 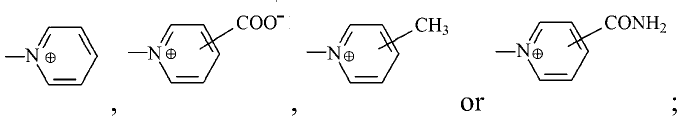 wherein R₈, R₉ and R₁₀ independently is C₁₋₄ alkyl.

10. The aqueous cyan pigment slurry of claim 8, wherein R' and R" independently is Cl or C₂H₅; each R₃ independently is -SO₃⁻Q⁺ or -SO₂C₂H₄O⁻ Q⁺; R₄ and R4' independently is 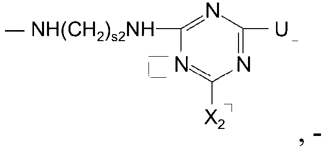 NH(CH₂)ₛ₃CO(CH₂)ₛ₄COO⁻Q⁺ or -NH(CH₂)ₛ₄NHCOC₂H₄ COO⁻Q⁺; X₂ is 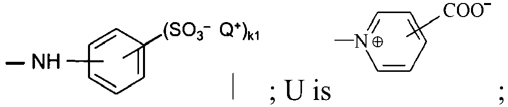 s2, s3 and s4 are 2; k1 is 1; and Q is Na.

11. The aqueous cyan pigment slurry of claim 1, wherein the anthraquinone dye is represented by the following (III): 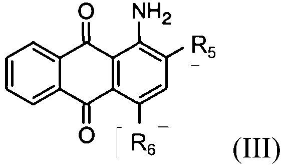
wherein R₅ is -SO₃⁻Q⁺ or -SO₂C₂H₄OSO₃⁻Q⁺;
R₆ is 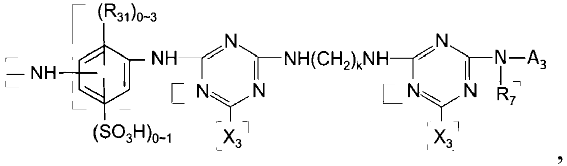 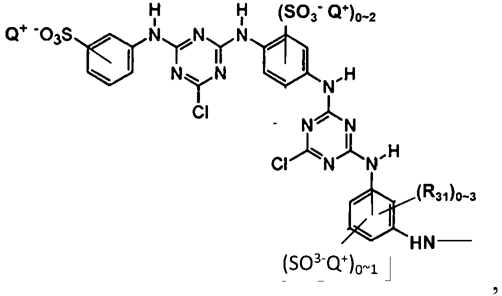 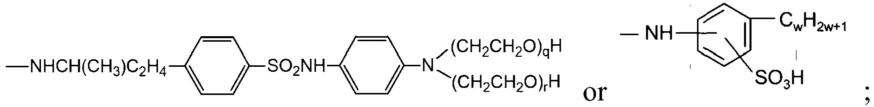
X₃ is halogen or C₁₋₃ alkoxy;
R₃₁ is C₁₋₄ alkyl;
A₃ is 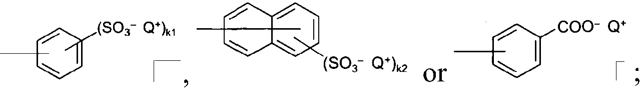
Q is H, Li or Na;
k is 2, 3 or 4;
q and r independently is an integer and q+r ranges from 12 to 30;
w is an integer from 10 to 20;
k1 and k2 independently is 1 or 2;
R₇ is H or C₁₋₄ alkyl.

12. The aqueous cyan pigment slurry of claim 11, wherein R₅ is -SO₃⁻ Q⁺; R₆ is 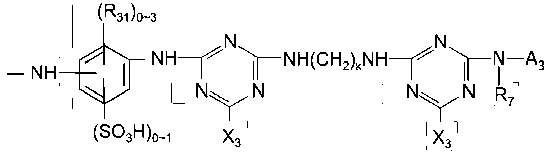 or 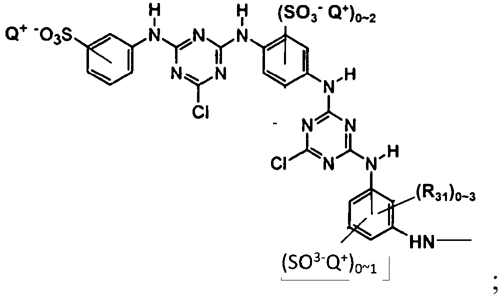 X₃ is Cl; R₃₁ is methyl; A₃ is 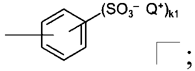 Q is Na; R₇ is H; and k is 3.

13. The aqueous cyan pigment slurry of claim 1, wherein the saturated fatty acid salt is a lithium salt or a sodium salt of the C₁₀₋₁₈ linear or branch fatty acid.

14. An ink composition, comprising:
an aqueous cyan pigment slurry of claim 1; and
water.

15. The ink composition of claim 14, wherein a content of the phthalocyanine pigment is 1 wt% to 10 wt% based on a total weight of the ink composition.
